# EUROPÄISCHE PATENTANMELDUNG

(11) **EP 1 358 920 A1**
(43) Veröffentlichungstag der Anmeldung: **05.11.2003**
(21) Anmeldenummer: 03005193.2
(22) Anmeldetag: 08.03.2003
(51) Int. Cl.: B01D 3/14, B01D 3/16, B01D 5/00

(54) **Verfahren und Vorrichtung für die nichtadiabatische Rektifikation ohne Rücklauferzeugung**

(30) Priorität: 30.04.2002 DE 10219263
(71) Anmelder: Förster, Hans, Dr.-Ing., 39110 Magdeburg (DE)
(72) Erfinder: Förster, Hans, Dr.-Ing., 39110 Magdeburg (DE)
(74) Vertreter: Voigt, Wolf-Rüdiger

(57) **Zusammenfassung**

Das Verfahren ist vorteilhaft anwendbar für die Reduzierung des Anschaffungsaufwandes der Rektifikation bei der thermischen Trennung von flüssigen Gemischen und für die Vermeidung hoher vertikaler Strukturen (Kolonnen).

Eine ideale Anwendung ergibt sich für die Absorptionskältetechnik, wenn als Arbeitsstoffpaar zwei Flüssigkeiten verwendet werden.

Aufgabe der Erfindung ist es, die Rektifikation in den Anschaffungskosten zu reduzieren, die klassischen hohen vertikalen Strukturen (Kolonnen) und den äußeren Rücklauf zu vermeiden, durch horizontale, kompakte Einheiten zu ersetzen und die Zahl der Stoffaustauschstufen zu reduzieren.

Die Aufgabe wird mithilfe gekühlter horizontaler Rektifikatoren gelöst, wobei ein indirekter Wärmetausch in der flüssigen Phase mit hervorragendem Wärmedurchgang die Triebkraft der Rektifikation erhöht und ein intensiver Wärme- und Stoffaustausch in einem flüssigen Bad mit axial eingebauten Rohren und quer zur Achsrichtung eingedüstem Dampf stattfindet.

## Beschreibung

Die Erfindung bezieht sich auf ein Verfahren und eine Einrichtung zur Erhöhung der Konzentration der niedrigsiedenden Komponente bzw. Fraktion bei ineinander voll löslichen Flüssigkeiten durch thermische Trennung. Grundverfahren der thermischen Trennung sind die Grundoperationen Verdampfen und Kondensieren, Destillation oder Desorption und Rektifikation. Anwendbar ist das Verfahren in der Destillationstechnik insbesondere für Stoffmischungen mit geringem Siedepunktabstand und bei Forderung hoher Reinheit des Kopfproduktes sowie bei kompakter horizontaler Bauweise. Eine besondere Anwendung ergibt sich für Absorptionskälteanlagen mit mäßigem Siedepunktabstand von Kältemittel und Absorptionsmittel, z. B. beim Stoffpaar Ammoniak-Wasser im Interesse kompakter Bauweise der Anlagen durch horizontale Anordnung der Rektifikation.

Die Erhöhung der Konzentration der leichtsiedenden Komponente oder Fraktion (Rektifikation) wird in der sogenannten Verstärkersäule einer Destillationskolonne durchgeführt. In dieser wird mit mehreren Kontaktböden im Gegenstrom eines flüssigen Rücklaufstromes mit dem aufsteigenden Dampfstrom eine stufenweise Anreicherung der leichten Fraktion nach oben erreicht. Als Voraussetzung für diesen Gegenstrom von Flüssigkeit und Dampf ist eine Rücklauferzeugung durch partielle Kondensation (Dephlegmator) oder Rückführung eines Teilstromes aus dem Kopfproduktkondensat mittels Pumpe zum Kolonnenkopf erforderlich. Die Rücklauferzeugung und Rücklaufförderung sind Bestandteil der Rektifikation, also der Erhöhung der Konzentration des Kopfproduktes bzw. der leichten Komponente. Dephlegmatoren arbeiten im Bereich der Dampfkühlung mit sehr schlechtem Wärmeübergang. Die Rücklauferzeugung ist daher sehr aufwändig. Der Wärmeübergang aus einer Dampfphase bei höheren Temperaturen als der Kondensationstemperatur der leichten Komponente begründet die schlechten Wärmeübergangsbedingungen, die zu aufwändigen apparativen Lösungen führen.

Ferner wird versucht, den Dampf im Dephlegmator mit einem Teilstrom der reichen Lösung indirekt zu kühlen und anschließend diesen Teilstrom der reichen Lösung direkt am Kopf der Verstärkersäule in den Rektifikator einzuspritzen (DE 19842577 A1, DE 19921469 A1, DE 19845361 A1). Durch das Direkteinspritzen der reichen Lösung mit mittlerer Kältemittelkonzentration ist der Effekt der Dampfkonzentrierung sehr gering und beschränkt sich auf Ergebnisse, die man bei reiner Direkteinspritzung ohne Dephlegmator ohnehin erhält.

Nach WO 91/08426 wird ein Verfahren zur Rektifikation angegeben, bei dem der Rücklauf am Kopf einer stehenden Kolonne durch einen 1. Dephlegmator mithilfe eines Teilstroms reicher, kalter Lösung als Kühlmedium erzeugt wird und zusätzlich unter dem 1. Dephlegmator ein 2. Dephlegmator vorgesehen ist, der mit teilentspannter, vorgekühlter armer Lösung als Kühlmedium arbeitet und zusätzlich Rücklauf bildet. Der Lösungswärmetausch ist daher in 2 Temperaturwechsler unterteilt.

Durch die Zwischenentspannung der armen Lösung entsteht Kältemitteldampf, der zu absorbieren ist. Der apparative Aufwand ist erheblich.

Weiter wird ein Absorptionskälteprozess durch EP 0034533 A3 angegeben, bei dem ausgekreistes Kältemittel nach dem Verdampfer mithilfe einer Pumpe auf Kondensationsdruck gebracht wird, durch Wärmetausch mit den desorbierten Dämpfen teilweise verdampft, der entstandene Dampf zu den Dämpfen vor der Kondensation gemischt und der flüssige Rest als äußerer Rücklauf in den Rektifikator geleitet wird. Als wesentlicher Nachteil dieses an sich bekannten Verfahrens ist der geringe Rücklaufstrom zu nennen, der auf hohen Druck zu bringen ist. Für kleine Absorptionskälteanlagen gibt es solche Pumpen nicht. Für größere Anlagen stellen sie eine erhebliche Kostenerhöhung dar.

In EP 0845641 A2 wird der Dephlegmator am Kopf des Rektifikators durch das vom Absorber vorgewärmte Kühlwasser gekühlt, das anschließend durch Luftkühlung zurück-gekühlt wird. Das durch Luftkühlung bedingte Temperatur- und Konzentrationsniveau führt zur Einschränkung tiefer Verdampfungstemperaturen Luftkühlung ist ist bei direkt-beheizten Desorbern sinnvoll möglich.

Eine Entlastung der Rücklauferzeugung bewirkt die Einspeisung eines Teilstroms des kalten Zulaufproduktes auf einem Zwischenboden der Verstärkersäule (2. Rücklauf). Diese Maßnahme verändert die Wärmebilanz und erhöht örtlich die Triebkraft der Rektifikation. Bekannt ist diese Modifikation der Rektifikation bei der Absorptionskältetechnik großer Leistung. Wegen der Notwendigkeit zusätzlicher Armaturen, Regler und Rohrleitungen und des damit verbundenen Aufwandes aber auch wegen des begrenzten Effektes des geringen Teilstromes eines solchen 2. Rücklaufes kann diese Modifikation der Rektifikation nicht allgemein und nicht bei kleinen Leistungen angewendet werden.

Verstärkersäulen ohne 2. Rücklauf bilden den Großteil der Rektifiziereinrichtungen und arbeiten adiabat, d. h. ohne äußere Wärmeabfuhr. Bei geringen Siedepunktabständen der zu trennenden Produkte ist die Triebkraft für die thermische Trennung klein, d. h. die Konzentrationsunterschiede und Temperaturunterschiede von Boden zu Boden sind gering. Bei Gemischen mit kleinen Siedepunktabständen ergeben sich daher ggf. große Stufenzahlen (viele Rektifikationsböden). Die daraus resultierenden Kosten belasten die thermische Trennung und die Konkurrenzfähigkeit solcher Verfahren.

Besonders deutlich wird das für die Durchsetzung der Absorptionskältetechnik gegenüber der kostengünstigen Kompressionskältetechnik. Die Absorptionskältetechnik arbeitet mit einer thermischen Trennung von Kältemittel und Absorptionsmittel Für das Arbeits-stoffpaar Lithiumbromid-Wasser ist die Trennung von Wasser und Lithiumsalz durch Verdampfen von Wasser ohne Rektifikation möglich. Dagegen erfordert die Trennung der Komponenten Ammoniak und Wasser eine Rektifikation. Bei der üblichen adiabaten Ausführung der Rektifikation ergeben sich stehende Säulen, die eine kompakte Ausführung von Ammoniak-Wasser-Absorptionskälteanlagen verhindern.

Der Erfindung liegt die Aufgabe zugrunde, Wege für die Gestaltung einer Rektifiziereinrichtung ohne äußere Rücklauferzeugung, mit geringer Stufenzahl und mit stark verbessertem Wärmedurchgang bei der nichtadiabaten Rektifikation (durch Kühlung) für den kombinierten Wärme- und Stoffaustausch sowie mit horizontalen Strukturen zur Anpassung an die bei Absorptionskälteanlagen üblichen horizontal ausgeführten Apparate für die Erhöhung der Kompaktheit und des geringeren Gesamtaufwandes bei der thermischen Trennung und speziell für Absorptionskälteanlagen mit dem Arbeitsstoffpaar Ammoniak und Wasser aufzuzeigen.

Erfindungsgemäß wird die Aufgabe dadurch gelöst, dass der zu konzentrierende Produktdampf durch eine vor Inbetriebnahme mit Produktkondensat teilgefüllte, horizontal angeordnete, gekühlte Apparatur ohne äußere Rücklauferzeugung geleitet wird, wobei der Dampf in wenigen Stufen durch Direktkontakt zwischen Dampf und gekühlter Flüssigkeit und durch Gegenstromführung des Kühlmediums in den Rohren und des Dampfes im Mantelraum die Temperatur der gekühlten Flüssigkeit annimmt, so dass sich am kalten Ende, am Austritt aus dieser Apparatur, eine hohe Gleichgewichtskonzentration des Dampfes ergibt.

Die Einrichtung zur Durchführung des erfindungsgemäßen Verfahrens besteht bei kleinen Leistungen aus einem horizontalen zylindrischen Behälter, der im unteren Bereich mit Kühlrohren besetzt ist, die das Produktkondensat kühlen, wobei über geschlitzte Wände oder über Dampfverteiler mit geschlitzten Seiten der Dampf in die gekühlten Zonen eines Flüssigkeitsbades ohne Flüssigkeitszufuhr eingeblasen wird und durch Trenn- oder Leitwände mehrere im Gegenstrom zum Kühlmedium arbeitende Wärme- und Stoffaustauschzonen (Stufen) entstehen, die horizontal in Dampfrichtung hintereinander angeordnet sind.

Eine zweite Einrichtung zur Durchführung des erfindungsgemäßen Verfahrens für große Leistungen kann mit vertikal übereinander angeordneten, gekühlten Zonen ausgeführt werden. Im Gegensatz zu den üblichen Rektifikationskolonnen sind bei dieser Ausführung die Wärme- und Stoffaustauscheinrichtungen nicht quer zur Apparateachse, sondern parallel zur Achse der horizontalen Druckgefäße angeordnet. Auch die geraden Rohre für das Kühlmedium sind stets horizontal angeordnet und werden infolge des Dampfdurchtritts immer von turbulent bewegter Flüssigkeit benetzt, so dass ein ausgezeichneter Wärmedurchgang vorliegt. Die Anstauhöhe der Flüssigkeit in den gekühlten Zonen wird durch Überlaufwehre begrenzt.

Bei allen erfindungsgemäßen Ausführungen entfallen Rücklaufpumpen, Dephlegmatoren, Temperaturregelungen und Rohrleitungssysteme, weil die äußere Rücklauferzeugung durch eine "innere" Rücklauferzeugung ersetzt wird, die durch Einbau von Kühlrohren in die horizontal angeordneten Wärme- und Stoffaustauschzonen mit ausgezeichneten Wärmedurchgangsbedingungen arbeitet.

Der so gekühlte Rektifikator erfordert infolge geringer Stufenzahl einen wesentlich geringeren Kostenaufwand gegenüber adiabaten Rektifikatoren.

Bei der inneren Rücklauferzeugung bildet sich das Flüssigkeitsbad in den Stoffaustauschzonen durch Ausscheidung höher siedender Komponenten immer neu, so dass eine äußere Rücklauferzeugung wie beim adiabaten Rektifikator entfällt. Der gebildete Flüssigkeitsüberschuss wird über eine Abtauchung in den Desorber zurückgeführt.

### Ausführungsbeispiel

Die Erfindung wird anhand von 2 Ausführungsbeispielen erläutert.
Fig. 1 zeigt eine Vorrichtung zur Durchführung des erfindungsgemäßen Verfahrens der Rektifikation (Dampfkonzentrierung) für vorwiegend kleine Dampfströme (Leistungen) mit horizontal hintereinander angeordneten Stufen.
Fig. 2 zeigt eine Vorrichtung zur Durchführung des erfindungsgemäßen Verfahrens der Rektifikation für vorwiegend große Dampfströme mit vertikaler Folge der Stufen.

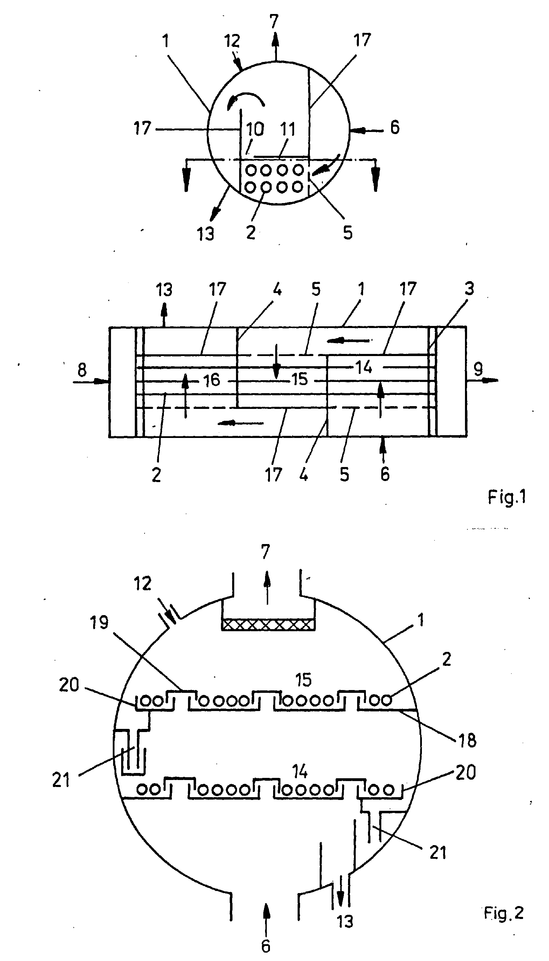

Nach Fig. 1 erfolgt die Rektifikation in einem horizontal angeordnetem zylindrischem Rektifikator 1 mit zwei Rohrböden 3 und Vorkammern 8, 9. Die Kühlrohre 2 sind nur in der unteren flüssigkeitsgefüllten Zone eingebaut, wobei der Flüssigkeitsstand in den Stoffaustauschzonen 14, 15, 16, durch nichtgezeichnete Wehre eingestellt, die durch Kühlung gebildete Flüssigkeit über diese Wehre abgeführt und in der letzten Stufe zum Desorber bzw. in die Austreibersäule der Destillation über eine Abtauchung abgeführt wird. Der Dampf aus dem Desorber (Austreiber) tritt am Dampfeintritt 6 in die 1. Stufe der Rektifikation ein, wird über vertikale Dampfschlitze 5 im Flüssigkeitsbad der 1. Stoffaustauschzone 14 fein verteilt und in intensiven Kontakt mit der gekühlten Flüssigkeit gebracht. Die durch Kühlung erniedrigte Temperatur der Flüssigkeit bestimmt die Flüssigkeitskonzentration und damit die Gleichgewichtskonzentration des Dampfes. Reicht die Kühlung in einer Stufe (Stoffaustauschzone) nicht aus, können weitere Stufen angeschlossen werden. Der Dampf verlässt das gekühlte Flüssigkeitsbad der Stoffaustauschzone 14 über ein Dampfübertrittsfenster 10, das das Leitblech 11 freilässt. Der Dampf wird oberhalb des Leitbleches 17 in die nächste Zone geleitet, der Flüssigkeitsüberschuss über ein nichtgezeichnetes Wehr und eine abgetauchte Ausnehmung im Leitblech 17 ebenfalls.

Der Dampf strömt jetzt in Gegenrichtung zur 1. Stoffaustauschzone 14 in der beschriebenen Weise wieder horizontal durch die nächste gekühlte Stoffaustauschzone 15 zwischen den Leitblechen 4. Reicht die Wärmeaustauschfläche bzw. die Wärmeleistung der gekühlten Zone 15 noch nicht aus, um die gewünschte Gleichgewichtskonzentration des Dampfes zu erzeugen, so wird eine dritte gekühlte Stufe als Stoffaustauschzone 16 angeschlossen. Mit der Menge und Temperatur der Kühlflüssigkeit in den Kühlrohren 2 wird entschieden, ob man mit einer, zwei oder drei gekühlten Stoffaustauschzonen 14, 15, 16, arbeiten muss. Der gekühlte konzentrierte Dampf verlässt die Einrichtung im Dampfaustritt 7, das konzentrierte Überschussprodukt im Produktüberschussaustritt 13.

Nach Fig. 2 für große Dampfmengen und Wärmeleistungen ist die Einrichtung zur Durchführung des erfindungsgemäßen Verfahrens als vertikale Folge gekühlter Stoffaustauschzonen 14, 15 dargestellt. Die Stoffaustauschzonen 18 sind in Längsachse des horizontalen Rektifikators 1 eingebaut, wobei bedarfsweise auch mehrere Rektifikatoren 1 übereinander angeordnet sein können. Der heiße Dampf wird über den Dampfeintritt 6 von unten zugeführt. Der kombinierte Wärme- und Stoffaustausch findet in gekühlten Stoffaustauschzonen 18 statt, wobei die Kühlrohre 2 zwischen Dampfverteilern 19 (Destillationstunnel oder Reihen von Glocken) angeordnet sind. Die durch die Teilkondensation gebildete Flüssigkeit wird über Überlaufwehre 20 und eine Abtauchung 21 jeweils nach unten abgeführt und schließlich in den Desorber (Austreiber) zurückgeleitet.

Als Kühlmedium, das durch die Rohre strömt, wird bevorzugt das kalte Zulaufprodukt verwendet, bei Absorptionskälteanlagen ist das die kalte reiche Lösung.

### Liste der verwendeten Bezeichnungen

- 1: Rektifikator
- 2: Kühlrohre
- 3: Rohrböden
- 4: Leitbleche
- 5: Dampfschlitze
- 6: Dampfeintritt
- 7: Dampfaustritt
- 8: Vorkammer Eintritt
- 9: Vorkammer Austritt
- 10: Dampfübertrittsfenster
- 11: Leitblech
- 12: Erstfüllungsanschluss
- 13: Produktüberschussaustritt
- 14, 15, 16: gekühlte Stoffaustauschzonen
- 17: Leitblech mit Überlauf
- 18: Stoffaustauschboden mit Kühlung
- 19: Dampfverteiler
- 20: Überlaufwehre
- 21: Abtauchung

## Patentansprüche

1. Verfahren zur Dampfkonzentrierung (Rektifikation) bei der thermischen Trennung von Flüssigkeitsgemischen für die Abtrennung von höher siedenden Komponenten bzw. Fraktionen, **dadurch gekennzeichnet, dass** die Triebkraft für die Dampfkonzentrierung durch indirekte Kühlung von ein oder mehreren Stoffaustauschzonen 14, 15 erhöht wird; wobei die gekühlten Stoffaustauschzonen horizontal oder vertikal in Reihe geschaltet sind, das Kühlmedium und der Dampf in Gegenstrom bzw. Kreuzgegenstrom geführt werden, der Dampf über Schlitze in das Flüssigkeitsbad der jeweiligen Stoffaustauschzone 14, 15, 16 eingedüst wird, wobei die Höhe des jeweiligen Flüssigkeitsbades durch ein Überlaufwehr konstant gehalten wird und die durch Teilkondensation erzeugte Flüssigkeitsmenge am kalten Ende der Rektifizierung über eine Abtauchung in den Desorber (Austreiber) zurückgeführt wird.

2. Verfahren nach Anspruch 1 **dadurch gekennzeichnet, dass** als Kühlmedium das kalte Zulaufprodukt verwendet wird, wobei die Zuführung in voller Menge ungeregelt erfolgt.

3. Verfahren nach Anspruch 1 **dadurch gekennzeichnet, dass** mindestens zwei Kühlmedien eingesetzt werden, wobei das kälteste Kühlmedium am kalten Ende der Rektifikation zum Einsatz gebracht wird.

4. Verfahren nach Anspruch 1 und 2 **dadurch gekennzeichnet, dass** als Zulaufprodukt bei Absorptionskälteanlagen die kalte reiche Lösung verwendet wird.

5. Einrichtung zur Realisierung des erfindungsgemäßen Verfahrens **dadurch gekennzeichnet, dass** der Rektifikator (1) als horizontal angeordneter Druckbehälter ausgebildet ist, in dem eine oder mehrere horizontal in Reihe geschaltete, flüssigkeitsgefüllte Stoffaustauschzonen (14, 15, 16) enthalten sind, wobei die Stoffaustauschzonen durch vertikal angeordnete Leitbleche (4) getrennt sind, der jeweilige Eintrittsbereich der Stoffaustauschzonen mit Dampfschlitzen (5) versehen ist, über die die in der unteren Zone des Druckbehälters befindlichen Kühlrohre (2) quer angeströmt werden und oberhalb der Kühlrohre (2) ein Leitblech (11) mit integriertem Gasübertrittsfenster (10) und Überlaufwehr vorgesehen ist.

6. Einrichtung zur Realisierung des erfindungsgemäßen Verfahrens nach Anspruch 1 **dadurch gekennzeichnet, dass** der Rektifikator (1) als horizontal angeordneter Druckbehälter ausgebildet ist, in dem sich ein oder mehrere Stoffaustauschböden (18) befinden, die vertikal in Reihe geschaltet sind, wobei jede Stoffaustauschzone mit integrierten Kühlrohren (2), Dampfverteilern (19), Überlaufwehren (20) sowie Abtauchungen (21) versehen ist.
